# EUROPEAN PATENT SPECIFICATION

(11) **EP 4 168 667 B1**
(45) Date of publication and mention of the grant of the patent: **08.05.2024**
(21) Application number: 21735851.4
(22) Date of filing: 15.06.2021
(51) Int. Cl.: F03D 3/02, F03D 9/00, F03D 13/20

(54) **A COMBINATION OFFSHORE ENERGY SYSTEM**
EIN KOMBINIERTES OFFSHORE-ENERGIESYSTEM
UN SYSTÈME ÉNERGÉTIQUE OFFSHORE COMBINÉ

(30) Priority: 17.06.2020 DK PA202070400
(43) Date of publication of application: 26.04.2023
(73) Proprietor: VESTAS WIND SYSTEMS A/S, 8200 Aarhus N (DK)
(72) Inventor: BAUN, Torben Ladegaard, 8200 Aarhus N (DK); DAM-SØRENSEN, Martin, 8200 Aarhus N (DK)
(74) Representative: Vestas Patents Department
(86) International application number: PCT/DK2021/050193
(87) International publication number: WO 2021/254577

(56) References cited:
- EP-A1- 1 741 928
- WO-A1-2017/108050
- WO-A1-2019/229476
- GB-A- 2 574 390
- US-A1- 2011 037 266
- US-A1- 2011 241 347
- US-A1- 2020 040 865

## Description

### INTRODUCTION

The present disclosure relates to a combined offshore system for converting wind energy, e.g. into electricity. The disclosure relates to a system comprising at least one offshore wind turbine with a tower holding a generator configured for converting wind energy, and at least one offshore wave or current power unit for converting energy from waves. The present disclosure further relates to a method for erecting an offshore wind turbine by use of a foundation for a wave power unit.

### BACKGROUND

Renewable energy, including energy from wind, tides, and waves are increasingly used for producing electricity. Many renewable energy projects are large-scale in terms of nominal power output as well as in terms of physical dimensions of the individual parts of the system.

The number of offshore installations, particularly for wind energy, grows strongly. While offshore installations offer the opportunity of making very large wind turbines with little adverse effect on the surroundings, they are often expensive both to install and to maintain. Further, power distribution may be complicated by large distances from the offshore location to the consumer.

Different combinations are suggested where offshore wind and wave power generation installations share the power distribution system. However, no surprising synergistic effect is obtained thereby, and the combination amounts essentially to a complete wind power installation adjacent a complete wave power installation.

Competition amongst producers of renewable energy systems applies pressure on prices, delivery schedule, quality, and safety. Accordingly, there is a constant desire for optimisation.

Offshore renewable energy systems with an offshore wind turbine and a wave power unit are disclosed in US 2011/037266 A1, WO 2019/229476 A1 and GB 2 574 390 A.

### SUMMARY

It is an object to improve offshore renewable energy systems. According to this and other objects, the disclosure provides an offshore renewable energy conversion system, comprising at least one offshore wind turbine with a tower holding a generator configured for converting wind energy, and at least one offshore wave power unit for converting energy from waves, wherein the wave power unit is anchored to a wave power foundation at the seabed, e.g. in the seabed or on the seabed.

The wind turbine tower is supported by a support structure forming at least one support element connecting the wind turbine tower and the wave power foundation.

Accordingly, the wind turbine tower is supported by the foundation of the wave power unit. This enables a stronger and lighter tower construction and a double function of the foundations to both facilitate wave power and wind power generation.

The offshore wind turbine could be a horizontal axis wind turbine, e.g. a single rotor wind turbine or a multiple rotor wind turbine, e.g. a 2n, 4n, 6n MR wind turbine with 2, 4, or 6 rotors. Particularly, the offshore wind turbine may be configured for converting wind to electric power or chemical substances such as hydrogen or ammonia.

The tower may be floating or fixed to the seabed, and it may have various configurations, e.g. made steel, or concrete. It may e.g. be made from sheets of steel plates curled into tubular sections and welded or bolted together, or it could be a lattice tower construction.

The generator could be for converting the wind energy to electric power or chemical substances.

Even though referred to herein as "offshore wave power unit", the offshore wave power unit may particularly be wave power based or current power passed for converting wave or current energy from sea waves into electric or chemical energy.

The offshore wave power unit is anchored to a wave power foundation in the seabed, e.g. a heavy steel or concrete foundation arranged on or in the seabed.

The wind turbine tower is supported by a support structure forming at least one support element connecting the wave power foundation to the wind turbine tower. The support element may particularly be rods or wires e.g. of steel.

A support element is herein defined as an element providing support for the wind turbine. Accordingly, the support element is a structural part of the system and has impact on the strength of the tower, and the support structure therefore limits deflection of the tower.

The wave power unit comprises a floating buoy movably attached, i.e. attached to but movable relative to the wave power foundation by an anchoring structure, e.g. chains, wires or rods or robes of steel or synthetic materials. The floating buoy could be made from steel, rubber, or other materials known from buoys and seamarks.

The buoy is movable relative to the wave power foundation without contact between the buoy and the support structure, i.e. such that it is freely movable without being limited by the support structure.

The buoy may be movable relative to the wave power foundation without contact between the buoy and the tower, i.e. such that it is freely movable without being limited by the tower.

The buoy and anchoring structure may extend in one direction from the wave power foundation and the support element may extend in another direction from the wave power foundation to the tower. One of the directions may be vertical and the other direction may be non-vertical. Particularly the anchoring structure may extend in a vertical direction. The support element may extend in a direction of 10-80 such as 20-70, such as 30-60 degrees to vertical.

The support element may be a tension element arranged to withstand tension but not compression, e.g. a cable. The tension element may extend in tension along a straight path from the wave power foundation to the wind turbine tower.

The support element may, alternatively, be a compression element arranged to withstand compression, e.g. steel rods, e.g. forming part of a tripod foundation. The compression element may extend in compression along a straight path from the wave power foundation to the wind turbine tower.

In one embodiment, the support structure comprises support elements being tension elements and support elements being compression elements.

To provide a good support, the support element may extend from a tower position located above a centre point midway between a surface of the sea and a top of the tower. In one embodiment, the support element extends to the tower top, or to a position less than 10 percent of the tower height from the tower top.

At least two wave power units may be provided for each wind turbine, and each of the wave power units may having individual wave power foundations. In this case, support elements may connect each wave power foundation to the wind turbine tower.

At least three wave power units may be arranged to form corners in a polygon encapsulating the wind turbine. The polygon could be a triangle, a quadrangle, a pentagon, a hexagon, or a heptagon etc.

The position of the buoy may be controllable by a control system e.g. operating a winch for increasing or shortening the length of the anchoring structure.

Particularly, the control system may define a lowered position where the anchor structure is tensioned, and an upper surface of the buoy is above sea level. This allows the upper surface to be used as a working or escape platform. In this embodiment, the lowered position may particularly be a position where a large part of the buoy is below the sea level to thereby create strong upwards buoyancy. In one embodiment, less than 40, 30, 20, or 10 percent of the buoyant body of the buoy is above the sea level and the rest is below the sea level to create a strong fixation between the downwards force in the anchoring structure and the upwards force caused by buoyancy.

To further fix the position of the buoy, the anchoring structure may comprise a plurality of anchor lines connecting the buoy and the foundation.

The control system may be configured for remote operation allowing control of the movement of the buoy to the lowered position from the wind turbine. In that way, personnel working in or at the wind turbine can move the buoy to the lowered position at a distance away from the wave power unit.

A connecting structure may be arranged for connecting the wind turbine and the upper surface of the buoy. The connecting structure may e.g. be a cable etc. for rescue operation or for guiding spare parts between the wind turbine and the upper surface of the buoy.

At the wind turbine, the connecting structure may be attached at a movable attachment point. The attachment point may e.g. be movable from a low position to a high position. The lower position could be below a rotor of the wind turbine and the high position could be above the rotor. In that way, the connecting structure may, in normal operation, be in safe distance from the rotor, and particularly well out of reach for the rotating wind turbine blades. In particular situations, e.g. during rescue or service operations, the attachment point is raised, e.g. to the top of the tower, and allows personnel or parts being communicated to the wind turbine either via the upper surface of the buoy or from the top of the tower. The tower top may e.g. include a helicopter or drone landing platform, and the connecting structure may connect that platform and the upper surface of the buoy. Likewise, the upper surface of the buoy may form a helicopter or drone landing platform.

The wave power unit(s) may form navigational marking e.g. for warning ships against collision with the wave power unit, the wind turbine, or for warning against anchoring near power cables or other installations on the seabed.

At least one of the offshore wind turbine and the offshore wave power unit may be configured to convert the energy to electricity.

A power transfer structure for exporting chemicals or electricity from the system may be provided. Such a transfer structure may particularly be configured for transfer power both produced by the wind turbine and produced by the wave power unit.

The wind turbine tower may be fixed to a tower foundation on the seabed, the tower foundation may be at a distance of at least 0,5 times the height of the tower from the wave power foundation.

The tower foundation and the wave power foundation may be connected below a surface of the sea.

The support structure may limit or prevent deflection of the tower. For this purpose, the support elements may extend not only linearly, but also undisturbed and directly from the wave power foundation to the tower. The support elements may each be constituted by single cable, e.g. a steel wire, extending undisturbed and directly from the wave power foundation to the tower.

For limiting deflection, the support structure may particularly comprise 2 or more support elements extending in different directions from the tower to different directions to individual wave power foundations arranged around the wind turbine. E.g. 2 foundations on opposite sides of the wind turbine, or three arranged in a triangle, or four arranged in sectors of 90 degrees around the wind turbine etc.

In a second aspect, the disclosure provides a method of erecting a wind turbine tower offshore. The method comprising providing least one offshore wave power unit for converting wave energy from sea waves, wherein the wave power unit is anchored to a wave power foundation in the seabed. Subsequently, the wave power foundation is utilized as a support during erection or assembly of the wind turbine tower, particularly by attaching a support element connecting the wave power foundation to the already assembled part of the wind turbine tower during the assembly or erection procedure.

### LIST OF DRAWINGS

The disclosure will now be described in further detail with reference to the accompanying drawings in which:
Fig. 1 illustrates a wind turbine;
Fig. 2 illustrates an offshore renewable energy system with a horizontal axis wind turbine;
Fig. 3 illustrates an offshore renewable energy system with a multi-rotor (MR) wind turbine;
Figs. 4-6 illustrate different numbers of wave power units for one MR wind turbine;
Fig. 7 illustrates an offshore renewable energy system with a wave power unit forming a platform for receiving objects;
Fig. 8 illustrates an offshore renewable energy system with a wave power unit forming a platform and comprising a rescue system forming a releasable path from the nacelle to the platform and a fixed path from a heli-platform to the platform;
Fig. 9 illustrates an offshore renewable energy system with a wave power unit forming a sea mark; and
Fig. 10 illustrates an offshore renewable energy system with two wave power units where the wave power foundations are connected and holds a number of shared floating buoys.

### DESCRIPTION OF EMBODIMENTS

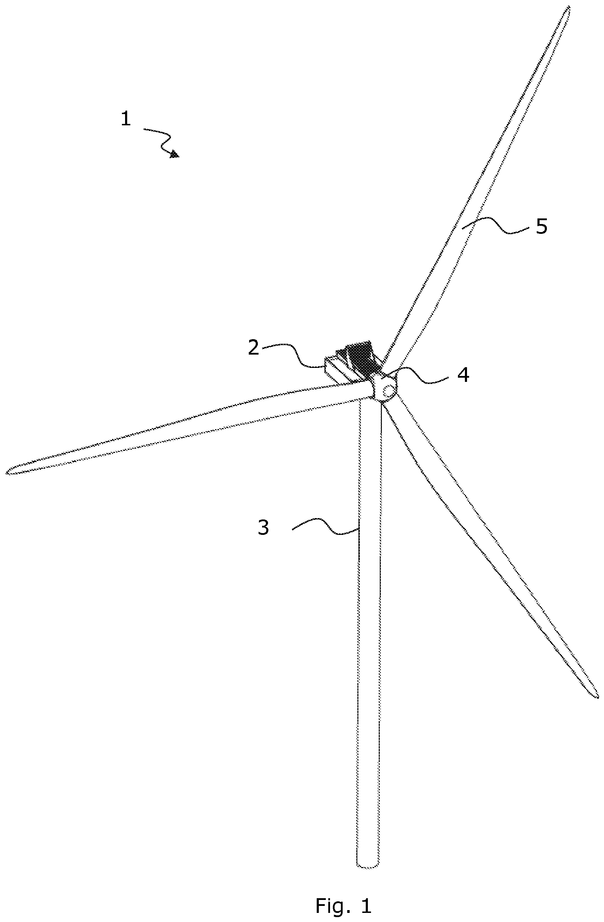

Fig. 1 shows a wind turbine 1 with a nacelle 2 mounted on a tower 3 and supporting a rotatable hub 4. The hub carries blades 5 rotating relative to the nacelle and thereby converting wind energy via rotation of a main shaft in the nacelle. Typically, the wind energy could be converted to electricity. The wind turbine is a horizontal axis wind turbine, but the disclosure may apply equally to a Multi-rotor (MR) wind turbine or other kinds of wind turbines.

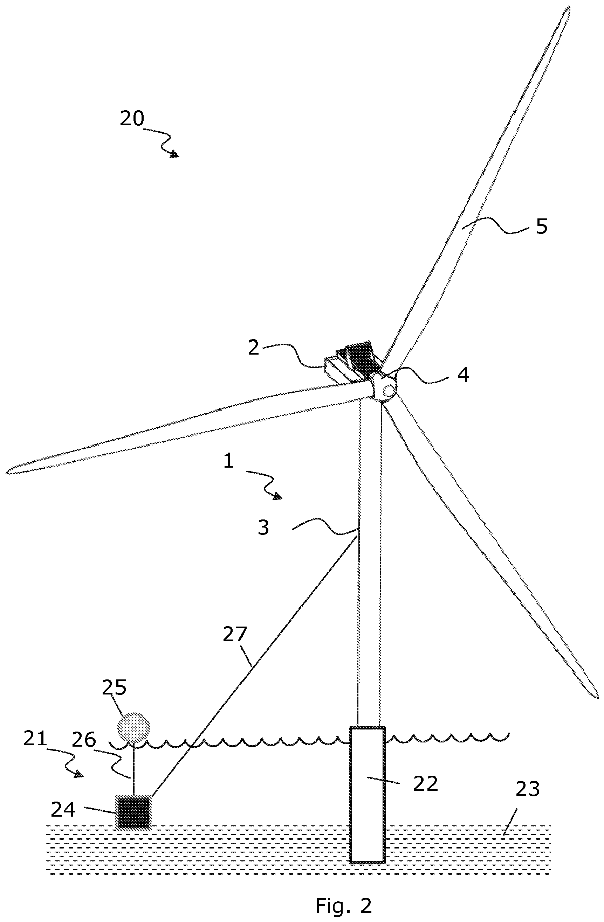

Fig. 2 illustrates an offshore renewable energy system 20 for converting renewable energy at sea. The system comprises two main entities, namely an offshore wind turbine 1 and an offshore wave power unit 21. The illustrated offshore wind turbine is a horizontal axis wind turbine basically of the kind illustrated in Fig. 1 but arranged in a foundation 22 on the seabed 23. The illustrated foundation is a mono-pile foundation rammed into the seabed, but it could be any kind of foundation for offshore constructions, e.g. a tripod foundation, a gravity foundation, or any other kind of foundation.

The offshore wave power unit 21 comprises an anchor unit 24, a float 25 and an anchoring structure in the form of a line 26 connecting the float to the anchor unit. In this embodiment, the anchor unit 24 houses a wave energy conversion structure, e.g. configured for generation of electricity based on a repeated pulling in the anchor line. An energy conversion structure could, alternatively or additionally, be included in the floating buoy or elsewhere.

The illustrated anchor unit is placed on the surface of the seabed, but it could also be fixed more solidly by pegs rammed into the seabed, or it could be rammed into the seabed in the same way as a mono-pile foundation, or it could have the shape or structure corresponding to any known foundation for offshore constructions, e.g. a tripod foundation, a gravity foundation or any other kind of foundation. The anchor unit 24 thereby forms a wave power foundation. In other embodiments, the anchor unit and the wave power foundation are two separate components, joined e.g. by wires.

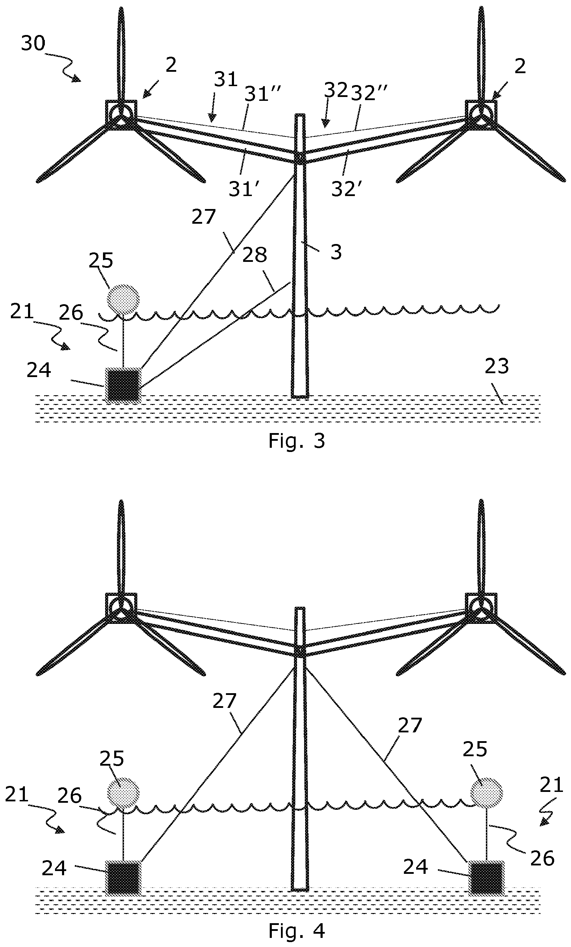

A support structure with a support element 27 in the form of a wire stretched between the wind turbine tower 3 and the anchor unit 24. The wire extends undisturbed and fully stretched, i.e. it is tensioned. In that way, the anchor unit for the wave power unit supports the wind turbine tower and enables construction of lighter, cheaper, and more flexible towers. The illustrated support structure comprises only one support element 27, but as illustrated in Fig. 3, it may comprise an additional support element 28 extending in the same direction from the tower and in a lower height.

Figs. 3-8 illustrate offshore renewable energy system with an MR-wind turbine 30. Relative to the wave power unit, the numbers applied in Fig. 2 apply also in Figs. 3-8.

The MR wind turbine 30 comprises a tower 3 carrying two load carrying structures 31, 32. The disclosed MR wind turbine is an MR 2 turbine meaning that it carries 2 energy generating units each formed by a nacelle 2 and therefore having the same reference number as the nacelle of the horizontal axis wind turbine 1 in Fig. 1.

The MR wind turbine may carry more than 2 units, e.g. 3 or 4 units, e.g. two rows of two units in different altitude.

The load carrying structures 31, 32 extend in opposite outwards directions away from the tower 3.

The load carrying structure comprises a first section 31', 31" and a second section 32', 32". Each section supports a nacelle 2, and each nacelle 2 forms an energy generating unit including a rotor formed by a hub 4 and blades 5.

The load carrying structures 3', 3", 4', 4" are attached to the tower 2 via a yaw arrangement, allowing the entire pair of load carrying structures to perform yawing movements with respect to the tower 2 in order to direct the rotors 6 into the incoming wind.

When the multirotor wind turbine 1 is operational, the nacelles 2 are placed symmetrically around the tower 3 so that the multirotor wind turbine is balanced.

Each section of the load carrying structures 31, 32, includes a first part 31', 32' and a second part 31", 32". The first part 31', 32' acts as compression elements and it is supported by the second part 31", 32" forming a tension element in the form of two guy wires extending from a swivel arrangement on the tower.

The MR wind turbine is an off-shore MR wind turbine placed on the seabed 23 and with the tower or a tower foundation extending through the water. The MR wind turbine is arranged in a foundation (not illustrated) on the seabed 23. The foundation could be any kind of foundation for offshore constructions, e.g. a tripod foundation, a gravity foundation, a mono-pile, or any other kind of foundation. The tower 3 is supported by the wave power foundation 24 via the support structure 27.

Fig. 4 illustrates an offshore renewable energy system with an MR-wind turbine 30 and with two wave power units 21 each connected to the tower by a support structure comprising two support elements 27. The two support elements extend in different directions from the tower, since they are both stretched, they reduce deflection of the tower.

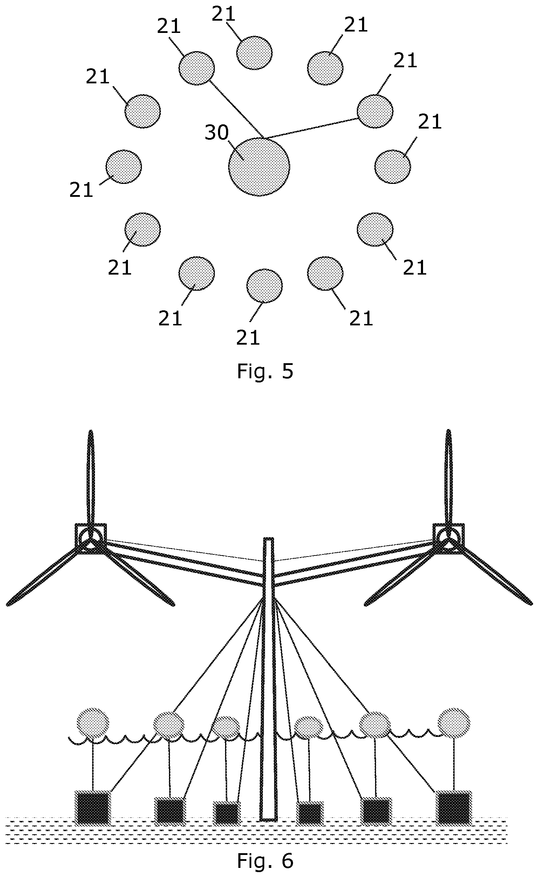

Figs. 5 and 6 illustrate an offshore renewable energy system comprising a plurality of wave power units 21 each connected to the tower by a support structure 27. The support structures extend in different directions away from the tower. Each support structure is constituted by a steel wire stretched to define a straight line between the tower and the wave power foundation to which it is connected.

The wave power units are arranged circumferentially about the wind turbine and thereby form a protective encapsulation preventing or at least reducing the risk of collision between the wind turbine and ships etc. The wave power units form corners in a polygon, i.e. if straight lines are drawn between each wave power unit, they form a polygon.

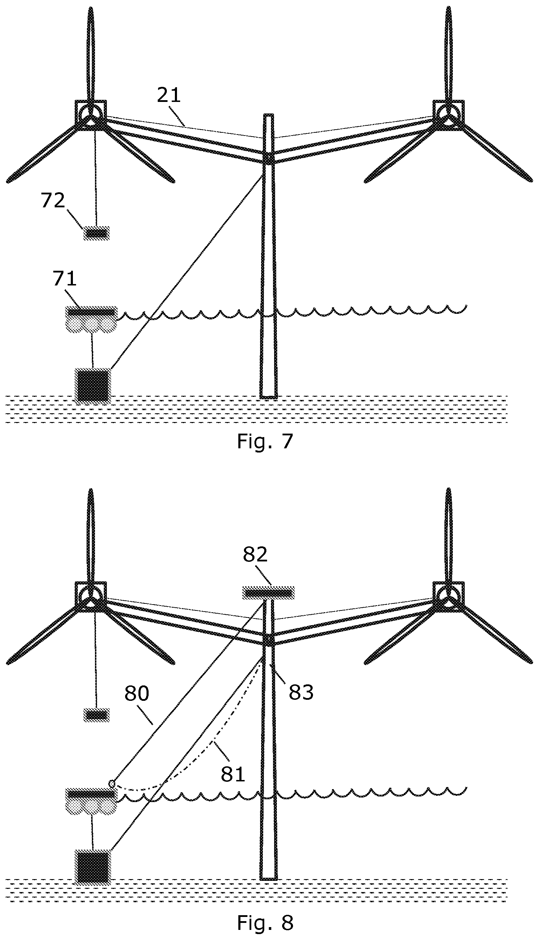

Fig. 7 illustrates the buoy when pulled downwards via the anchoring structure. The buoy is in a lowered position in which it is suspended between the upwards forces created by buoyancy and the downwards forces in the anchoring structure. The upper surface 71 can be used as a working platform for receiving objects or personnel, e.g. objects 72 being lowered from the nacelle of the wind turbine, e.g. for exchanging spare parts etc.

Fig. 8 illustrates a connecting structure 80, 81 connecting the wind turbine and the upper surface of the buoy. Numeral 81 designates a connecting structure when connected to a lower attachment point 83 at the tower, and numeral 80 designates the connecting structure after the attachment point has been raised to a high point at the heli-platform 82. The lower attachment point is below the rotor level and the high point is above the rotor level.

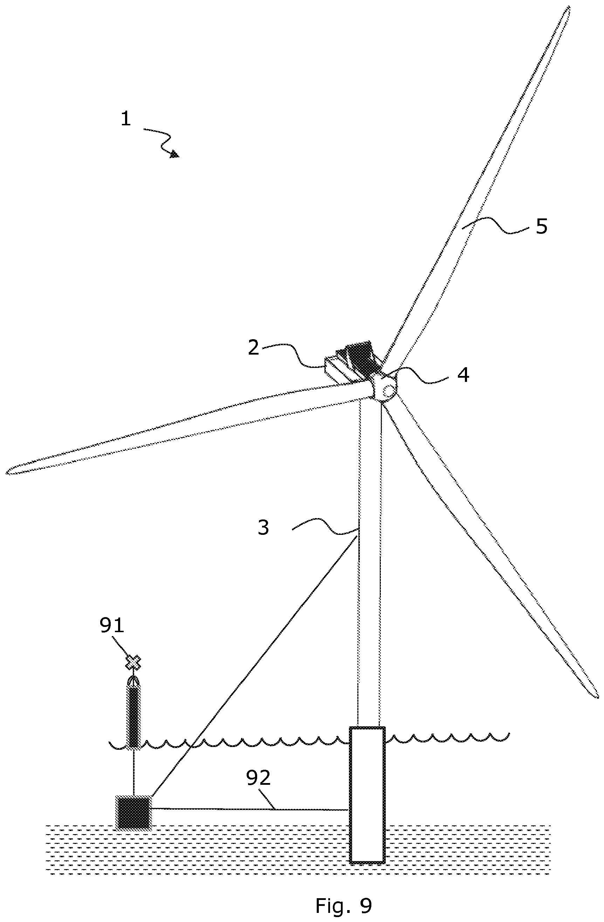

Fig. 9 illustrates a buoy 91 forming a seamark and a connector 92 connecting the wave power foundation and the wind turbine foundation. The connector 92 may e.g. electrically connect the wave power unit with the wind turbine, e.g. connecting to a power junction. In that way, the wave power units and the wind turbine may share a power conversion assembly, e.g. comprising a transformer, a converter, or other conversion components, or a battery for storing the generated power.

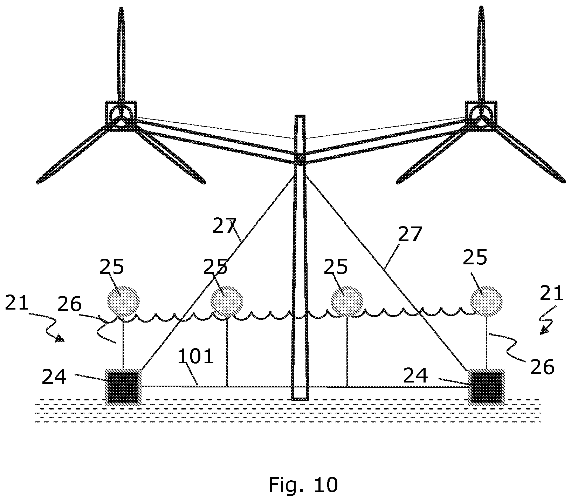

Fig. 10 illustrates an energy system where two wave power foundations 24 are joined with a foundation joint 101 and additional wave power units are connected to the foundation joint. The foundation joint may form electrical connection between all wave power units and the wind turbine and allow a mutual conversion assembly, e.g. housed in the wind turbine.

## Claims

1. An offshore renewable energy system (20) for converting renewable energy, comprising at least one offshore wind turbine (1,30) with a tower (3) holding a generator configured for converting wind energy, and at least one offshore wave power unit (21) for converting wave energy from sea waves, wherein the wave power unit (21)is anchored to a wave power foundation (24) at the seabed (23), and the wind turbine tower (3) is supported by a support structure forming at least one support element (27) connecting the wave power foundation (24) to the wind turbine tower (3), the wave power unit (21) further comprises a floating buoy (25) movably attached to the wave power foundation (24) by an anchoring structure (26) and the buoy (25) is movable relative to the wave power foundation (24) without contact between the buoy (25) and the support structure.

2. The system (20) according to any of claim1, wherein the buoy (25) and anchoring structure (26) extend in one direction from the wave power foundation (24) and the support element (27) extends in another direction from the wave power foundation (24) to the tower (3).

3. The system (20) according to any of the preceding claims, wherein the support element (27) is a tension element.

4. The system (20) according to any of the preceding claims, comprising at least two wave power units (21) each having a corresponding wave power foundation (24) for each wind turbine (1,30), wherein the support structure comprises at least two support elements (27) extending in different directions away from the wind turbine tower (3) and connecting the wave power foundations (24) to the wind turbine tower (3).

5. The system (20) according to any of the preceding claims, comprising at least three wave power units (21) arranged to form corners in a polygon encapsulating the wind turbine (1,30).

6. The system (20) according to any of the preceding claims, configured for movement of the buoy (25) to a lowered position where the anchor structure is tensioned, and an upper surface (71) of the buoy (25) is above sea level.

7. The system (20) according to claim 6, comprising remote operation means allowing control of the movement of the buoy (25) to the lowered position from the wind turbine (1,30).

8. The system (20) according to claim 6 or 7, comprising a connecting structure (80, 81) connecting the wind turbine (1,30) and the upper surface (71) of the buoy (25).

9. The system (20) according to any of the preceding claims, wherein the wave power foundation (24) is on or in the seabed (23).

10. The system (20) according to any of the preceding claims, wherein the wind turbine tower (3) is floating.

11. The system (20) according to any of claims 1-9, wherein the wind turbine tower (3) is fixed to a tower foundation on the seabed (23), the tower foundation being at a distance of at least 0,5 times the height of the tower (3) from the wave power foundation (24).

12. The system (20) according to any of the preceding claims, wherein the tower foundation and the wave power foundation (24) is connected below a surface of the sea.

13. The system (20) according to any of the preceding claims, wherein the support structure limits deflection of the tower (3).

14. The system (20) according to any of the preceding claims, wherein the support elements (27) extend undisturbed and directly from the wind turbine tower (3) to the wave power foundations (24).

15. The system (20) according to any of the preceding claim, comprising a connection structure connecting at least one wave power unit (21) to the wind turbine (1,30), and at least one conversion assembly for conversion of power from the wind turbine (1,30) and from the wave power unit (21).

## Patentansprüche

1. Offshore-System für erneuerbare Energie (20) zum Umwandeln von erneuerbarer Energie, umfassend zumindest eine Offshore-Windkraftanlage (1,30) mit einem Turm (3), welcher einen Generator enthält, welcher dazu konfiguriert ist, Windenergie umzuwandeln, und zumindest eine Offshore-Wellenkrafteinheit (21) zum Umwandeln von Wellenenergie aus Meereswellen, wobei die Wellenkrafteinheit (21) an einem Wellenkraftfundament (24) auf dem Meeresgrund (23) verankert ist, und der Windkraftanlagenturm (3) von einer Trägerstruktur getragen wird, welche zumindest ein Trägerelement (27) bildet, welches das Wellenkraftfundament (24) mit dem Windkraftanlagenturm (3) verbindet, die Wellenkrafteinheit (21) weiter eine schwimmende Boje (25) umfasst, welche an dem Wellenkraftfundament (24) durch eine Ankerstruktur (26) beweglich befestigt ist, und die Boje (25) ohne Kontakt zwischen der Boje (25) und der Trägerstruktur relativ zu dem Wellenkraftfundament (24) beweglich ist.

2. System (20) nach einem von Anspruch 1, wobei sich die Boje (25) und Ankerstruktur (26) in einer Richtung von dem Wellenkraftfundament (24) erstrecken und sich das Trägerelement (27) in eine andere Richtung von dem Wellenkraftfundament (24) zu dem Turm (3) erstreckt.

3. System (20) nach einem der vorstehenden Ansprüche, wobei das Trägerelement (27) ein Spannelement ist.

4. System (20) nach einem der vorstehenden Ansprüche, umfassend zumindest zwei Wellenkrafteinheiten (21), welche jeweils ein entsprechendes Wellenkraftfundament (24) für jede Windkraftanlage (1,30) aufweisen, wobei die Trägerstruktur zumindest zwei Trägerelemente (27) umfasst, welche sich in unterschiedliche Richtungen von dem Windkraftanlagenturm (3) weg erstrecken und die Wellenkraftfundamente (24) mit dem Windkraftanlagenturm (3) verbinden.

5. System (20) nach einem der vorstehenden Ansprüche, umfassend zumindest drei Wellenkrafteinheiten (21), welche so angeordnet sind, dass sie Ecken in einem Vieleck bilden, welches die Windkraftanlage (1,30) umschließt.

6. System (20) nach einem der vorstehenden Ansprüche, welches für eine Bewegung der Boje (25) zu einer abgesenkten Position konfiguriert ist, in welcher die Ankerstruktur gespannt wird, und eine obere Oberfläche (71) der Boje (25) über dem Meeresspiegel liegt.

7. System (20) nach Anspruch 6, umfassend entfernte Betriebsmittel, welche eine Steuerung der Bewegung der Boje (25) in die abgesenkte Position von der Windkraftanlage (1,30) ermöglichen.

8. System (20) nach Anspruch 6 oder 7, umfassend eine Verbindungsstruktur (80, 81), welche die Windkraftanlage (1,30) und die obere Oberfläche (71) der Boje (25) verbindet.

9. System (20) nach einem der vorstehenden Ansprüche, wobei sich das Wellenkraftfundament (24) auf oder in dem Meeresgrund (23) befindet.

10. System (20) nach einem der vorstehenden Ansprüche, wobei der Windkraftanlagenturm (3) schwimmt.

11. System (20) nach einem der Ansprüche 1-9, wobei der Windkraftanlagenturm (3) an einem Turmfundament auf dem Meeresgrund (23) fixiert ist, wobei sich das Turmfundament in einem Abstand von zumindest 0,5 Mal der Höhe des Turms (3) von dem Wellenkraftfundament (24) befindet.

12. System (20) nach einem der vorstehenden Ansprüche, wobei das Turmfundament und das Wellenkraftfundament (24) unter einer Oberfläche des Meeres verbunden sind.

13. System (20) nach einem der vorstehenden Ansprüche, wobei die Trägerstruktur Durchbiegung des Turms (3) begrenzt.

14. System (20) nach einem der vorstehenden Ansprüche, wobei sich die Trägerelemente (27) ungehindert und direkt von dem Windkraftanlagenturm (3) zu den Wellenkraftfundamenten (24) erstrecken.

15. System (20) nach einem vorstehenden Anspruch, umfassend eine Verbindungsstruktur, welche zumindest eine Wellenkrafteinheit (21) mit der Windkraftanlage (1,30) verbindet, und zumindest eine Umwandlungsanordnung zur Umwandlung von Kraft aus der Windkraftanlage (1,30) und aus der Wellenkrafteinheit (21).

## Revendications

1. Système d'énergie renouvelable en mer (20) pour convertir de l'énergie renouvelable, comprenant au moins une éolienne en mer (1,30) avec une tour (3) contenant un générateur configuré pour convertir de l'énergie éolienne, et au moins une unité d'énergie houlomotrice en mer (21) pour convertir l'énergie des vagues provenant des vagues de la mer, dans lequel l'unité d'énergie houlomotrice (21) est ancrée à une fondation d'énergie houlomotrice (24) au niveau du fond marin (23) et la tour éolienne (3) est supportée par une structure de support formant au moins un élément de support (27) reliant la fondation d'énergie houlomotrice (24) à la tour éolienne (3), l'unité d'énergie houlomotrice (21) comprend en outre une bouée flottante (25) fixée de manière mobile à la fondation d'énergie houlomotrice (24) par une structure d'ancrage (26) et la bouée (25) est mobile par rapport à la fondation d'énergie houlomotrice (24) sans contact entre la bouée (25) et la structure de support.

2. Système (20) selon la revendication 1, dans lequel la bouée (25) et la structure d'ancrage (26) s'étendent dans une direction depuis la fondation d'énergie houlomotrice (24) et l'élément de support (27) s'étend dans une autre direction depuis la fondation d'énergie houlomotrice (24) vers la tour (3).

3. Système (20) selon l'une quelconque des revendications précédentes, dans lequel l'élément de support (27) est un élément de tension.

4. Système (20) selon l'une quelconque des revendications précédentes, comprenant au moins deux unités d'énergie houlomotrice (21) présentant chacune une fondation d'énergie houlomotrice correspondante (24) pour chaque éolienne (1,30), dans lequel la structure de support comprend au moins deux éléments de support (27) s'étendant dans des directions différentes à l'écart de la tour d'éolienne (3) et reliant les fondations d'énergie houlomotrice (24) à la tour d'éolienne (3).

5. Système (20) selon l'une quelconque des revendications précédentes, comprenant au moins trois unités d'énergie houlomotrice (21) agencées pour former des coins dans un polygone englobant l'éolienne (1,30).

6. Système (20) selon l'une quelconque des revendications précédentes, configuré pour un déplacement de la bouée (25) jusqu'à une position abaissée à laquelle la structure d'ancrage est tendue, et une surface supérieure (71) de la bouée (25) est au-dessus du niveau de la mer.

7. Système (20) selon la revendication 6, comprenant des moyens de fonctionnement à distance permettant la commande du déplacement de la bouée (25) jusqu'à la position abaissée à partir de l'éolienne (1,30).

8. Système (20) selon la revendication 6 ou 7, comprenant une structure de liaison (80, 81) reliant l'éolienne (1,30) et la surface supérieure (71) de la bouée (25).

9. Système (20) selon l'une quelconque des revendications précédentes, dans lequel la fondation d'énergie houlomotrice (24) est sur ou dans le fond marin (23).

10. Système (20) selon l'une quelconque des revendications précédentes, dans lequel la tour éolienne (3) flotte.

11. Système (20) selon l'une quelconque des revendications 1-9, dans lequel la tour éolienne (3) est fixée à une fondation de tour sur le fond marin (23), la fondation de tour étant à une distance d'au moins 0,5 fois la hauteur de la tour (3) à partir de la fondation d'énergie houlomotrice (24).

12. Système (20) selon l'une quelconque des revendications précédentes, dans lequel la fondation de tour et la fondation d'énergie houlomotrice (24) sont reliées au-dessous d'une surface de la mer.

13. Système (20) selon l'une quelconque des revendications précédentes, dans lequel la structure de support limite une déviation de la tour (3).

14. Système (20) selon l'une quelconque des revendications précédentes, dans lequel les éléments de support (27) s'étendent sans perturbation et directement depuis la tour éolienne (3) jusqu'aux fondations d'énergie houlomotrice (24).

15. Système (20) selon l'une quelconque des revendications précédentes, comprenant une structure de liaison reliant au moins une unité d'énergie houlomotrice (21) à l'éolienne (1,30) et au moins un ensemble de conversion pour une conversion d'énergie provenant de l'éolienne (1, 30) et de l'unité d'énergie houlomotrice (21).
